(19) Europäisches Patentamt / European Patent Office / Office européen des brevets

(11) **EP 3 648 044 A1**

(12) **EUROPEAN PATENT APPLICATION**
published in accordance with Art. 153(4) EPC

(43) Date of publication:
**06.05.2020  Bulletin 2020/19**

(51) Int Cl.:
*G06Q 40/00* (2012.01)

(21) Application number: **18896594.1**

(22) Date of filing: **19.11.2018**

(86) International application number:
**PCT/CN2018/116088**

(87) International publication number:
**WO 2019/128526 (04.07.2019 Gazette 2019/27)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority:  **27.12.2017  CN 201711440835**

(71) Applicant: **ALIBABA GROUP HOLDING LIMITED**
**George Town, Grand Cayman (KY)**

(72) Inventors:
• **PAN, Jianmin**
**Hangzhou, Zhejiang 311121 (CN)**
• **ZHANG, Peng**
**Hangzhou, Zhejiang 311121 (CN)**

(74) Representative: **Goddar, Heinz J.**
**Boehmert & Boehmert**
**Anwaltspartnerschaft mbB**
**Pettenkoferstrasse 22**
**80336 München (DE)**

(54) **METHOD, APPARATUS, AND DEVICE FOR TRAINING RISK CONTROL MODEL AND RISK CONTROL**

(57)  Implementations of the present specification disclose a risk control model training and risk control method, apparatus, and device. In a risk control model training stage, historical data in a specified time period can be obtained, and the specified time period can be divided into sub time periods; then, respective features of the historical data in each sub time period can be determined, and respective features of the historical data in the sub time periods can be sorted based on a specified sorting rule of the sub time periods to obtain a feature sequence; and finally, the obtained feature sequence can be used as a sample to train a risk control model.

FIG. 2

**Description**

**TECHNICAL FIELD**

The present specification relates to the field of information technologies, in particular, to a risk control model training and risk control method, apparatus, and device.

**BACKGROUND**

In many industries, the importance of risk control is self-evident. For example, in the financial industry, risk control work of banks can be identifying a transaction suspected of money laundering from accepted transactions.
Specifically, a certain amount of historical data (service data that has been identified as legal or illegal) can be collected first. By analyzing the historical data, a risk control person can summarize risk control rules used to identify whether service data is legal.
The risk control person can also design feature types (such as a credit amount in the last 90 days and a ratio of a credit amount in the last 30 days to the credit amount in the last 90 days). Then, for each piece of historical data, the risk control person can determine a feature value of the historical data corresponding to each feature type based on the historical data. Finally, the risk control person can use the feature value of each service feature of each piece of historical data as a sample, to train a risk control model used to identify whether service data is legal.
Based on the existing technology, a more accurate risk control method is needed.

**SUMMARY**

Implementations of the present specification provide a risk control model training and risk control method, apparatus, and device, to alleviate a problem of poor accuracy of the existing risk control method.
To alleviate the previous technical problem, the implementations of the present specification are implemented as follows:
An implementation of the present specification provides a risk control model training method, including: obtaining historical data in a specified time period, and dividing the specified time period into sub time periods; for each sub time period, determining respective features of the historical data in the sub time period based on the historical data; sorting respective features of the historical data in the sub time periods based on a specified sorting rule of the sub time periods to obtain a feature sequence; and training a risk control model by using the feature sequence as a sample.
An implementation of the present specification provides a risk control method, including: obtaining service data in a specified time period, and dividing the specified time period into sub time periods; for each sub time period, determining respective features of the service data in the sub time period based on the service data; sorting respective features of the service data in the sub time periods based on a specified sorting rule of the sub time periods to obtain a feature sequence; and identifying whether the service data is legal by inputting the feature sequence into the risk control model trained according to the previous risk control model training method.
An implementation of the present specification provides a risk control model training apparatus, including: an acquisition module, configured to obtain historical data in a specified time period, and divide the specified time period into sub time periods; a determining module, configured to: for each sub time period, determine respective features of the historical data in the sub time period based on the historical data; a sorting module, configured to sort respective features of the historical data in the sub time periods based on a specified sorting rule of the sub time periods to obtain a feature sequence; and a training module, configured to train a risk control model by using the feature sequence as a sample.
An implementation of the present specification provides a risk control apparatus, including: an acquisition module, configured to obtain service data in a specified time period, and divide the specified time period into sub time periods; a determining module, configured to: for each sub time period, determine respective features of the service data in the sub time period based on the service data; a sorting module, configured to sort respective features of the service data in the sub time periods based on a specified sorting rule of the sub time periods to obtain a feature sequence; and an identification module, configured to identify whether the service data is legal by inputting the feature sequence into the risk control model trained according to the previous risk control model training method.
An implementation of the present specification provides a risk control model training device, including one or more processors and one or more memories, where the memory stores a program, and the one or more processors are configured to perform the following steps: obtaining historical data in a specified time period, and dividing the specified time period into sub time periods; for each sub time period, determining respective features of the historical data in the sub time period based on the historical data; sorting respective features of the historical data in the sub time periods based on a specified sorting rule of the sub time periods to obtain a feature sequence; and training a risk control model by using the feature sequence as a sample.

An implementation of the present specification provides a risk control device, including one or more processors and one or more memories, where the memory stores a program, and the one or more processors are configured to perform the following steps: obtaining service data in a specified time period, and dividing the specified time period into sub time periods; for each sub time period, determining respective features of the service data in the sub time period based on the service data; sorting respective features of the service data in the sub time periods based on a specified sorting rule of the sub time periods to obtain a feature sequence; and identifying whether the service data is legal by inputting the feature sequence into the risk control model trained according to the previous risk control model training method.

It can be learned from the previous technical solutions provided in the implementations of the present specification that, in the implementations of the present specification, in a risk control model training stage, historical data in a specified time period can be obtained, and the specified time period can be divided into sub time periods; then, respective features of the historical data in each sub time period can be determined, and respective features of the historical data in the sub time periods can be sorted based on a specified sorting rule of the sub time periods to obtain a feature sequence; and finally, the obtained feature sequence can be used as a sample to train a risk control model. Because the feature sequence obtained through time-based sorting can more comprehensively and accurately represent a change process of the historical data than homogeneous feature values in the existing technology, the risk control model trained by using the feature sequence corresponding to the historical data as the sample can more accurately identify whether service data is legal.

## BRIEF DESCRIPTION OF DRAWINGS

To describe technical solutions in implementations of the present specification or in the existing technology more clearly, the following briefly describes the accompanying drawings needed for describing the implementations or the existing technology. Apparently, the accompanying drawings in the following descriptions merely show some implementations recorded in the present specification, and a person of ordinary skill in the art can still derive other drawings from these accompanying drawings without creative efforts.

FIG. 1 is a flowchart illustrating a risk control model training method, according to an implementation of the present specification;
FIG. 2 is a flowchart illustrating a risk control method, according to an implementation of the present specification;
FIG. 3 is a schematic diagram illustrating a risk control model training apparatus, according to an implementation of the present specification;
FIG. 4 is a schematic diagram illustrating a risk control apparatus, according to an implementation of the present specification;
FIG. 5 is a schematic diagram illustrating a risk control model training device, according to an implementation of the present specification; and
FIG. 6 is a schematic diagram illustrating a risk control device, according to an implementation of the present specification.

## DESCRIPTION OF IMPLEMENTATIONS

In the existing service data identification method, both risk control rules summarized by a risk control person and feature types designed by the risk control person are homogeneous feature values obtained by the risk control person by analyzing historical data, and therefore cannot comprehensively and accurately represent a change process of the historical data. For example, in a money laundering scenario, a debit amount in the last 90 days (a predetermined feature type) is merely a homogeneous feature value, and therefore cannot represent a change process of a debit amount in each of the last 90 days.

A core idea of the present specification is as follows: To enable a sample used to train a risk control model to represent a change process of historical data as much as possible, the sample can be determined based on feature distribution of the historical data in terms of time to train the risk control model.

To make a person skilled in the art better understand the technical solutions in the present specification, the following clearly describes the technical solutions in the implementations of the present specification with reference to the accompanying drawings in the one or more implementations of the present specification. Apparently, the described implementations are merely some rather than all of the implementations of the present specification. All other implementations obtained by a person of ordinary skill in the art by using the implementations of the present specification without creative efforts shall fall within the protection scope of the present specification.

The technical solutions provided in the implementations of the present specification are described below in detail with reference to the accompanying drawings.

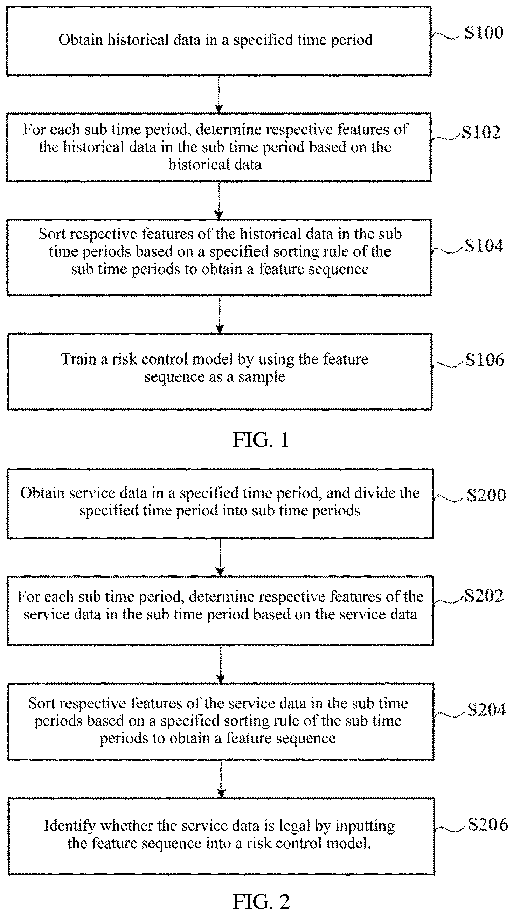

FIG. 1 is a flowchart illustrating a risk control model training method, according to an implementation of the present specification. The method includes the following steps:

S100. Obtain historical data in a specified time period, and divide the specified time period into sub time periods.

The method can be executed by a device configured to perform at least one of risk control model training or risk control (briefly referred to as a risk control device).

In this implementation of the present specification, the historical data in the specified time period can be obtained. The historical data is service data that has been identified as legal or illegal. For example, in an anti-money laundering scenario, the historical data can be account records of 1,000 users.

It is worthwhile to note here that, a ratio of an amount of legal data to an amount of illegal data in the obtained historical data usually should be between a first specified value and a second specified value, where the second specified value is greater than the first specified value. For example, the first specified value can be 10 and the second specified value can be 100.

The specified time period can be specified as needed. For example, when a risk control model needs to be trained (assume that the current time is June 1, 2017), historical data in the last three months can be obtained, that is, historical data from March 1, 2017 to May 31, 2017 can be obtained. A time period from March 1, 2017 to May 31, 2017 is the specified time period.

With reference to the two examples, the obtained historical data in the specified time period can be account records of 1,000 users from 0: 00 on March 1, 2017 to 24: 00 on May 31, 2017.

In this implementation of the present specification, the specified time period can be divided into the sub time periods. Still with reference to the previous examples, the specified time period from March 1, 2017 to May 31, 2017 can be divided into 92 sub time periods: 0: 00 to 24: 00 on March 1, 2017 (namely, full day of March 1, 2017), full day of March 2, 2017, ..., and full day of May 31, 2017.

S102. For each sub time period, determine respective features of the historical data in the sub time period based on the historical data.

In the present step, the risk control device can specifically determine, for each predetermined feature type, respective features of the historical data corresponding to the feature type in the sub time period. For example, the feature type can be a debit amount, a credit amount, a quantity of account operations, etc.

Table 1 shows features of an account record of user A in each sub time period, according to an implementation of the present specification. As shown in Table 1, for example, three features of an account of user A in full day of March 1, 2017 (sub time period) are 20, 000 RMB in debit, 80, 000 RMB in credit, and 5 in quantity of account operations.

Table 1

|  | March 1, 2017 | March 2, 2017 | ... | May 31, 2017 |
|---|---|---|---|---|
| Debit amount | 20,000 | 50,000 |  | 80,000 |
| Credit amount | 80,000 | 90,000 |  | 200,000 |
| Quantity of account operations | 5 | 6 |  | 8 |

S104. Sort respective features of the historical data in the sub time periods based on a specified sorting rule of the sub time periods to obtain a feature sequence.

After determining the respective features of the historical data in the sub time periods, the risk control device can sort the respective features of the historical data in the sub time periods based on the specified sorting rule of the sub time periods to obtain the feature sequence. The sorting rule can be a time sequence of the sub time periods.

Specifically, the risk control device can sort, for each feature type, features of the historical data corresponding to the feature type in the sub time periods to obtain a feature sequence corresponding to the feature type.

Table 1 is still used as an example. In this case, feature sequences obtained by the risk control device can be as follows: a feature sequence corresponding to the debit amount: {20,000, 50,000, ..., 80,000}; a feature sequence corresponding to the credit amount: {80,000, 90,000, ..., 200,000}; and a feature sequence corresponding to the quantity of account operations: {5, 6, ..., 8}.

It is worthwhile to note that, here, a method for obtaining the feature sequence corresponding to each feature type can be alternatively as follows: performing normalization processing on the features of the historical data corresponding to the feature type in the sub time periods; and sorting processed features to obtain a feature sequence corresponding to the feature type.

Normalization processing needs to be performed on the features corresponding to each feature type because features of the historical data corresponding to different feature types may be of different orders of magnitude. For example, in Table 1, an order of magnitude of each feature of the debit amount is 10,000, and an order of magnitude of each feature of the quantity of account operations is 1. If normalization processing is not performed on features of different feature types, some feature types of greater orders of magnitude play a leading role in model training effect, resulting in low accuracy of a trained risk control model.

Specifically, for each feature type, a sum of features of the historical data corresponding to the feature type in the sub time periods can be calculated; for each feature of the historical data corresponding to the feature type, a ratio of the feature to the calculated sum can be calculated; and the ratio corresponding to the feature can be used as a processed feature.

For example, in Table 1, for the debit amount, values of features of the feature type in the sub time periods can be processed. Specifically, 20,000 can be processed as 20,000/(20,000 + 50,000 + ... + 80,000), and 50,000, ..., and 80,000 each can be processed similarly.

Further, sometimes, even though the previously described normalization processing is performed on the features corresponding to each feature type, the obtained processed features may still have the following problem: For example, in three sub time periods, features of an account record of user A corresponding to a specific feature type are "0, 10,000, 0", and features of an account record of user B corresponding to the feature type are "0, 10, 0". Results obtained after the two groups of features are processed by using the normalization method are both "0, 1, 0", but obviously, the two groups of features represent different risk information.

Therefore, the previous normalization method can be further modified as follows:

For each feature type, weight values respectively corresponding to features of the historical data corresponding to the feature types in the sub time periods are predetermined, and a sum of the features of the historical data corresponding to the feature type in the sub time periods is calculated; and for each feature of the historical data corresponding to the feature types, a ratio of the feature to the calculated sum is calculated, the ratio corresponding to the feature is multiplied by a weight value corresponding to the feature to obtain a calculation result corresponding to the feature, and the calculation result corresponding to the feature is used as a processed feature.

For example, assume that in the previous example, weight values corresponding to the first group of features "0, 10,000, 0" are "0, 5, 0", and weight values corresponding to the second group of features "0, 10, 0" are "0, 2, 0". The two groups of features can be processed by using the modified normalization method, to obtain a processed first group of features "0, 5, 0" and a processed second group of features "0, 2, 0". As such, the two groups of features are distinguished from each other.

S106. Train a risk control model by using the feature sequence.

In this implementation of the present specification, any algorithm that can train a model by using a feature sequence as input can be used to train the risk control model described here.

Specifically, a convolutional neural network training algorithm can be used to train the risk control model by using the feature sequences corresponding to respective feature types as the training samples.

For example, for an account record of each user, feature sequences corresponding to three feature types of the account record can be used as samples. Assume that samples corresponding to user A are as follows: a feature sequence corresponding to a debit amount: {2, 5, ..., 8}; a feature sequence corresponding to a credit amount: {8, 9, ..., 20}; and a feature sequence corresponding to a quantity of account operations: {5, 6, ..., 8}.

Obviously, because the feature sequences have the same quantity of features (namely, the same quantity of sub time periods), the three feature sequences can be combined into the following n*m feature matrix corresponding to

$$\text{user A: } \begin{vmatrix} 2 & 5 & \dots & 8 \\ 8 & 9 & \dots & 20 \\ 5 & 6 & \dots & 8 \end{vmatrix} \text{, where } n \text{ is the quantity of feature types and } m \text{ is the quantity of sub time periods.}$$

As such, 1000 feature matrices respectively corresponding to 1000 users can be obtained, and the 1000 feature matrices can be input into a convolutional neural network model.

The following briefly describes a training process.

For example, in an anti-money laundering scenario, assume that 1000 feature matrices respectively corresponding to 1000 users are obtained as samples by using step S100 to step S104.

The convolutional neural network model can be trained by using mini batch stochastic gradient descent (mini batch SGD), and the following steps are used:

1. 100 samples are randomly selected from the 1000 samples (n*m feature matrices), and are input into an input layer of a neural network.
2. The input layer inputs each sample (n*m feature matrix) to a convolutional layer for convolution. For each sample, a convolution kernel quantity and size can be specified as needed, and there can be s convolution kernels. Because feature types are not continuous, the convolution kernel does not need to be scanned in a distribution direction of each feature type, and at least one of a row quantity or a column quantity of the convolution kernel can be a predetermined quantity of feature types. For example, a size of each convolution kernel can be n*j, where j is a positive integer less than m. As such, because the row quantity of the convolution kernel is the same as the row quantity of the feature matrix, the convolution kernel only needs to be translated in a horizontal direction to perform convolution calculation (a step can be specified as needed, for example, the step is 1). After convolution calculation is performed by using the s convolution kernels for the sample, s feature graphs (also in a matrix form) can be obtained. Because the 100 samples are input into the convolutional layer, the convolutional layer can output 100s feature graphs.

3. After the obtained 100s feature graphs are processed by using an activation function (such as the RELU function), processed feature graphs are transferred to a pooling layer for pooling (for example, the maxpooling method can be used for pooling). During pooling, a pooling matrix size and a translation step can be specified as needed.

4. The previous step 2 and step 3 can be repeated multiple times. After a combination of the convolutional layer, the activation function, and the pooling layer are used for processing multiple times, "small feature graphs" (a quantity of small feature graphs is usually greater than s) can be obtained. The obtained small feature graphs are input into a fully connected layer. In the fully connected layer, the small feature graphs are concatenated into a long vector in a unit of row. Then, the fully connected layer inputs the long vector into softmax for classification, to obtain a two-dimensional vector, where the two-dimensional vector represents the probability that the sample is legal and the probability that the sample is illegal, for example, (0.2, 0.8).

5. A training effect representation value that represents the current training effect is calculated based on the two-dimensional vector and a loss function (such as cross entropy). If the training effect representation value satisfies a specified threshold (for example, the training effect representation value is convergent), the training ends. If the training effect representation value does not satisfy the specified threshold, parameters (such as the convolution kernel in the convolutional layer) of the neural network are adjusted based on the training effect representation value, and then step 1 is restarted, that is, the subsequent training iterations are performed until an obtained training result representation effect value satisfies the specified threshold.

FIG. 2 shows a risk control method, according to an implementation of the present specification. The method includes the following steps:

S200. Obtain service data in a specified time period, and divide the specified time period into sub time periods.
S202. For each sub time period, determine respective features of the service data in the sub time period based on the service data.
S204. Sort respective features of the service data in the sub time periods based on a specified sorting rule of the sub time periods to obtain a feature sequence.
S206. Identify whether the service data is legal by inputting the feature sequence into a risk control model.

In the method shown in FIG. 2, the risk control model trained by using the method shown in FIG. 1 is used to identify whether the service data is legal. It is worthwhile to note that:

First, "specified time period" in the process shown in FIG. 2 is usually different from "specified time period" in the process shown in FIG. 1, and the specified time period shown in FIG. 1 is earlier than the specified time period shown in FIG. 2.
Second, in the process shown in FIG. 2, similar to the process shown in FIG. 1, the feature sequence corresponding to the service data also needs to be determined as input of the risk control model. For a specific method, references can be made to the previous description, and details are omitted.

According to the risk control model training method shown in FIG. 1 and the risk control method shown in FIG. 2, in a risk control model training stage, historical data in a specified time period can be obtained, and the specified time period can be divided into sub time periods; then, respective features of the historical data in each sub time period can be determined, and respective features of the historical data in the sub time periods can be sorted based on a specified sorting rule of the sub time periods to obtain a feature sequence; and finally, the obtained feature sequence can be used as a sample to train a risk control model. Because the feature sequence obtained through time-based sorting can more comprehensively and accurately represent a change process of the historical data than homogeneous feature values in the existing technology, the risk control model trained by using the feature sequence corresponding to the historical data as training samples can more accurately identify whether service data is legal.

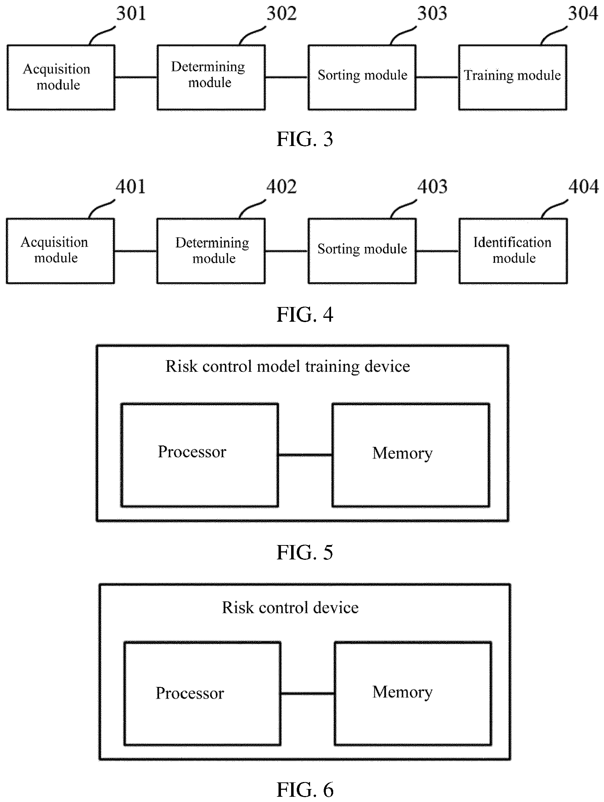

Based on the risk control model training method shown in FIG. 1, an implementation of the present specification further correspondingly provides a risk control model training apparatus. As shown in FIG. 3, the apparatus includes: acquisition module 301, configured to obtain historical data in a specified time period, and divide the specified time period into sub time periods; determining module 302, configured to: for each sub time period, determine respective features of the historical data in the sub time period based on the historical data; sorting module 303, configured to sort respective features of the historical data in the sub time periods based on a specified sorting rule of the sub time periods to obtain a feature sequence; and training module 304, configured to train a risk control model by using the feature sequence as a sample.

Determining module 302 is configured to determine features of the historical data for more than one feature type in the sub time period based on the historical data.

Sorting module 303 is configured to: for each feature type, sort features of the historical data for the feature type in the sub time periods based on a specified sorting rule of the sub time periods to obtain a feature sequence corresponding to the feature type.

The risk control model is a convolutional neural network model.

At least one of a row quantity or a column quantity of a convolution kernel of a convolutional layer in the convolutional neural network model is a predetermined quantity of feature types.

Based on the risk control method shown in FIG. 2, an implementation of the present specification further correspondingly provides a risk control apparatus. As shown in FIG. 4, the apparatus includes: acquisition module 401, configured to obtain service data in a specified time period, and divide the specified time period into sub time periods; determining module 402, configured to: for each sub time period, determine respective features of the service data in the sub time period based on the service data; sorting module 403, configured to sort respective features of the service data in the sub time periods based on a specified sorting rule of the sub time periods to obtain a feature sequence; and identification module 404, configured to identify whether the service data is legal by inputting the feature sequence into a risk control model, where the risk control model is trained according to the method shown in FIG. 1.

Based on the risk control model training method shown in FIG. 1, an implementation of the present specification further correspondingly provides a risk control model training device. As shown in FIG. 5, the device includes one or more processors and one or more memories, where the memory stores a program, and the one or more processors are configured to perform the following steps: obtaining historical data in a specified time period, and dividing the specified time period into sub time periods; for each sub time period, determining respective features of the historical data in the sub time period based on the historical data; sorting respective features of the historical data in the sub time periods based on a specified sorting rule of the sub time periods to obtain a feature sequence; and training a risk control model by using the feature sequence as a sample.

Based on the risk control method shown in FIG. 2, an implementation of the present specification further correspondingly provides a risk control device. As shown in FIG. 6, the device includes one or more processors and one or more memories, where the memory stores a program, and the one or more processors are configured to perform the following steps: obtaining service data in a specified time period, and dividing the specified time period into sub time periods; for each sub time period, determining respective features of the service data in the sub time period based on the service data; sorting respective features of the service data in the sub time periods based on a specified sorting rule of the sub time periods to obtain a feature sequence; and identifying whether the service data is legal by inputting the feature sequence into a risk control model, where the risk control model is trained according to the method shown in FIG. 1.

The implementations in the present specification are described in a progressive way. For same or similar parts of the implementations, mutual references can be made to the implementations. Each implementation focuses on a difference from other implementations. Especially, the devices shown in FIG. 5 and FIG. 6 are basically similar to method implementations, and therefore are described briefly. For related parts, references can be made to some descriptions in the method implementations.

In the 1990s, whether a technical improvement is a hardware improvement (for example, an improvement to circuit structures, such as a diode, a transistor, or a switch) or a software improvement (an improvement to a method process) can be clearly distinguished. However, as technologies develop, current improvements to many method processes can be considered as direct improvements to hardware circuit structures. Almost all designers program an improved method process into a hardware circuit, to obtain a corresponding hardware circuit structure. Therefore, a method process can be improved by using a hardware entity module. For example, a programmable logic device (PLD) (for example, a field programmable gate array (FPGA)) is such an integrated circuit, and a logical function of the PLD is determined by a user through device programming. A designer "integrates" a digital system to a single PLD through self-programming, without requiring a chip manufacturer to design and manufacture a dedicated integrated circuit chip. In addition, at present, instead of manually manufacturing an integrated circuit chip, such programming is mostly implemented by using "logic compiler" software. The logic compiler software is similar to a software compiler used to develop and write a program. Original code needs to be written in a particular programming language before being compiled. The language is referred to as a hardware description language (HDL). There are many HDLs, such as the Advanced Boolean Expression Language (ABEL), the Altera Hardware Description Language (AHDL), Confluence, the Cornell University Programming Language (CUPL), HDCal, the Java Hardware Description Language (JHDL), Lava, Lola, MyHDL, PALASM, and the Ruby Hardware Description Language (RHDL). At present, the Very-High-Speed Integrated Circuit Hardware Description Language (VHDL) and Verilog are most commonly used. A person skilled in the art should also understand that a hardware circuit that implements a logical method process can be readily obtained provided that the method process is logically programmed by using several of the previously described hardware description languages and is programmed into an integrated circuit.

A controller can be implemented in any appropriate way. For example, the controller can be in a form of a microprocessor or a processor, or a computer-readable medium that stores computer-readable program code (such as software or firmware) that can be executed by the microprocessor or the processor, a logic gate, a switch, an application-specific integrated circuit (ASIC), a programmable logic controller, or a built-in microcontroller. Examples of the controller include but are not limited to the following microcontrollers: ARC 625D, Atmel AT91SAM, Microchip PIC18F26K20, and Silicone Labs C8051F320. A memory controller can be further implemented as a part of control logic of a memory. A person skilled in the art also knows that, in addition to implementing the controller by using the computer-readable program code, method steps can be logically programmed to enable the controller to implement the same function in forms of a logic gate, a switch, an application-specific integrated circuit, a programmable logic controller, and a built-in microcontroller. Therefore, such a controller can be considered as a hardware component, and an apparatus that is included in the controller and configured to implement various functions can also be considered as a structure in the hardware component. Alternatively, the apparatus configured to implement various functions can even be considered as both a software module implementing a method and a structure in the hardware component.

The system, apparatus, module, or unit illustrated in the previous implementations can be specifically implemented by using a computer chip or an entity, or can be implemented by using a product having a certain function. A typical implementation device is a computer. Specifically, the computer can be, for example, a personal computer, a laptop computer, a cellular phone, a camera phone, a smartphone, a personal digital assistant, a media player, a navigation device, an email device, a game console, a tablet computer, a wearable device, or a combination of any of these devices.

For ease of description, the previous apparatus is divided to various units based on functions for description when the previous apparatus is described. Certainly, when the present specification is implemented, functions of the units can be implemented in one or more pieces of software and/or hardware.

A person skilled in the art should understand that the implementations of the present specification can be provided as a method, a system, or a computer program product. Therefore, the present specification can use a form of hardware only implementations, software only implementations, or implementations with a combination of software and hardware. In addition, the present specification can use a form of a computer program product that is implemented on one or more computer-usable storage media (including but not limited to a magnetic disk memory, a CD-ROM, an optical memory, etc.) that include computer-usable program code.

The present specification is described with reference to the flowcharts and/or block diagrams of the method, the device (system), and the computer program product according to the implementations of the present specification. It is worthwhile to note that computer program instructions can be used to implement each process and/or each block in the flowcharts and/or the block diagrams and a combination of a process and/or a block in the flowcharts and/or the block diagrams. These computer program instructions can be provided for a general-purpose computer, a dedicated computer, an embedded processor, or a processor of another programmable data processing device to generate a machine, so that the instructions executed by the computer or the processor of another programmable data processing device generate an apparatus for implementing a specified function in one or more processes in the flowcharts and/or in one or more blocks in the block diagrams.

Alternatively, these computer program instructions can be stored in a computer-readable memory that can instruct the computer or another programmable data processing device to work in a specific way, so that the instructions stored in the computer-readable memory generate an artifact that includes an instruction apparatus. The instruction apparatus implements a specified function in one or more processes in the flowcharts and/or in one or more blocks in the block diagrams.

Alternatively, these computer program instructions can be loaded onto the computer or another programmable data processing device, so that a series of operations and steps are performed on the computer or another programmable device, thereby generating computer-implemented processing. Therefore, the instructions executed on the computer or another programmable device provide steps for implementing a specified function in one or more processes in the flowcharts and/or in one or more blocks in the block diagrams.

In a typical configuration, a computing device includes one or more processors (CPUs), input/output interfaces, network interfaces, and memories.

The memory may include a non-persistent memory, a random access memory (RAM), a nonvolatile memory, and/or another form in a computer-readable medium, for example, a read-only memory (ROM) or a flash memory (flash RAM). The memory is an example of the computer-readable medium.

The computer-readable medium includes persistent, non-persistent, movable, and unmovable media that can store information by using any method or technology. The information can be a computer-readable instruction, a data structure, a program module, or other data. Examples of the computer storage medium include but are not limited to a phase-change memory (PRAM), a static random access memory (SRAM), a dynamic random access memory (DRAM), another type of random access memory (RAM), a read-only memory (ROM), an electrically erasable programmable read-only memory (EEPROM), a flash memory or another memory technology, a compact disc read-only memory (CD-ROM), a digital versatile disc (DVD) or another optical storage, a cassette magnetic tape, a magnetic tape/magnetic disk storage or another magnetic storage device, or any other non-transmission medium. The computer storage medium can be configured to store information accessible to a computing device. As defined in the present specification, the computer-readable medium does not include computer-readable transitory media such as a modulated data signal and a carrier.

It is worthwhile to further note that, the terms "comprise" and "include", or any other variants thereof are intended to cover a non-exclusive inclusion, so that a process, method, product, or device that includes a list of elements not only includes those elements but also includes other elements that are not expressly listed, or further includes elements inherent to such process, method, product, or device. Without more constraints, an element preceded by "includes a ..." does not preclude the existence of additional identical elements in the process, method, product, or device that includes the element.

A person skilled in the art should understand that the implementations of the present specification can be provided as a method, a system, or a computer program product. Therefore, the present specification can use a form of hardware only implementations, software only implementations, or implementations with a combination of software and hardware. In addition, the present specification can use a form of a computer program product that is implemented on one or more computer-usable storage media (including but not limited to a magnetic disk memory, a CD-ROM, an optical memory, etc.) that include computer-usable program code.

The present specification can be described in the general context of a computer executable instruction executed by a computer, for example, a program module. Generally, the program module includes a routine, a program, an object, a component, a data structure, etc. executing a specific task or implementing a specific abstract data type. The present specification can also be practiced in distributed computing environments. In the distributed computing environments, tasks are performed by remote processing devices connected through a communications network. In a distributed computing environment, the program module can be located in both local and remote computer storage media including storage devices.

The previous descriptions are merely implementations of the present specification, and are not intended to limit the present specification. A person skilled in the art can make various modifications and changes to the present specification. Any modification, equivalent replacement, improvement, etc. made without departing from the spirit and principle of the present specification shall fall within the scope of the claims of the present specification.

**Claims**

1. A risk control model training method, comprising:

   obtaining historical data in a specified time period, and dividing the specified time period into sub time periods;
   for each sub time period, determining respective features of the historical data in the sub time period based on the historical data;
   sorting respective features of the historical data in the sub time periods based on a specified sorting rule of the sub time periods to obtain a feature sequence; and
   training a risk control model by using the feature sequence as a sample.

2. The method according to claim 1, wherein the determining respective features of the historical data in the sub time period specifically comprises:
   for each predetermined feature type, determining respective features of the historical data corresponding to the feature type in the sub time period;
   the sorting respective features of the historical data in the sub time periods to obtain a feature sequence specifically comprises:
   for each feature type, sorting features of the historical data corresponding to the feature type in the sub time periods to obtain a feature sequence corresponding to the feature type; and
   the training a risk control model by using the feature sequence as a sample specifically comprises:
   training the risk control model by using the feature sequence corresponding to each feature type as a sample.

3. The method according to claim 2, wherein the sorting features of the historical data corresponding to the feature type in the sub time periods to obtain a feature sequence corresponding to the feature type specifically comprises:

performing normalization processing on the features of the historical data corresponding to the feature type in the sub time periods; and

sorting processed features to obtain a feature sequence corresponding to the feature type.

4. The method according to claim 2, wherein the risk control model is a convolutional neural network model.

5. The method according to claim 4, wherein at least one of a row quantity or a column quantity of a convolution kernel of a convolutional layer in the convolutional neural network model is a predetermined quantity of feature types.

6. A risk control method, comprising:

obtaining service data in a specified time period, and dividing the specified time period into sub time periods;

for each sub time period, determining respective features of the service data in the sub time period based on the service data;

sorting respective features of the service data in the sub time periods based on a specified sorting rule of the sub time periods to obtain a feature sequence; and

identifying whether the service data is legal by inputting the feature sequence into the risk control model trained according to the method in any one of claims 1 to 5.

7. A risk control model training apparatus, comprising:

an acquisition module, configured to obtain historical data in a specified time period, and divide the specified time period into sub time periods;

a determining module, configured to: for each sub time period, determine respective features of the historical data in the sub time period based on the historical data;

a sorting module, configured to sort respective features of the historical data in the sub time periods based on a specified sorting rule of the sub time periods to obtain a feature sequence; and

a training module, configured to train a risk control model by using the feature sequence as a sample.

8. The apparatus according to claim 7, wherein the determining module is configured to: for each predetermined feature type, determine respective features of the historical data corresponding to the feature type in the sub time period;

the sorting module is configured to: for each feature type, sort features of the historical data corresponding to the feature type in the sub time periods to obtain a feature sequence corresponding to the feature type; and

the training module is specifically configured to: train the risk control model by using the feature sequence corresponding to each feature type as a sample.

9. The apparatus according to claim 8, wherein the sorting module is configured to perform normalization processing on the features of the historical data corresponding to the feature type in the sub time periods; and sort processed features to obtain a feature sequence corresponding to the feature type.

10. The apparatus according to claim 8, wherein the risk control model is a convolutional neural network model.

11. The apparatus according to claim 10, wherein at least one of a row quantity or a column quantity of a convolution kernel of a convolutional layer in the convolutional neural network model is a predetermined quantity of feature types.

12. A risk control apparatus, comprising:

an acquisition module, configured to obtain service data in a specified time period, and divide the specified time period into sub time periods;

a determining module, configured to: for each sub time period, determine respective features of the service data in the sub time period based on the service data;

a sorting module, configured to sort respective features of the service data in the sub time periods based on a specified sorting rule of the sub time periods to obtain a feature sequence; and

an identification module, configured to identify whether the service data is legal by inputting the feature sequence into the risk control model trained according to the method in any one of claims 1 to 5.

13. A risk control model training device, comprising one or more processors and one or more memories, wherein the memory stores a program, and the one or more processors are configured to perform the following steps:

obtaining historical data in a specified time period, and dividing the specified time period into sub time periods;
for each sub time period, determining respective features of the historical data in the sub time period based on the historical data;
sorting respective features of the historical data in the sub time periods based on a specified sorting rule of the sub time periods to obtain a feature sequence; and
training a risk control model by using the feature sequence as a sample.

14. A risk control device, comprising one or more processors and one or more memories, wherein the memory stores a program, and the one or more processors are configured to perform the following steps:

obtaining service data in a specified time period, and dividing the specified time period into sub time periods;
for each sub time period, determining respective features of the service data in the sub time period based on the service data;
sorting respective features of the service data in the sub time periods based on a specified sorting rule of the sub time periods to obtain a feature sequence; and
identifying whether the service data is legal by inputting the feature sequence into the risk control model trained according to the method in any one of claims 1 to 5.

| | |
|---|---|
| Obtain historical data in a specified time period | S100 |

↓

| | |
|---|---|
| For each sub time period, determine respective features of the historical data in the sub time period based on the historical data | S102 |

↓

| | |
|---|---|
| Sort respective features of the historical data in the sub time periods based on a specified sorting rule of the sub time periods to obtain a feature sequence | S104 |

↓

| | |
|---|---|
| Train a risk control model by using the feature sequence as a sample | S106 |

FIG. 1

| | |
|---|---|
| Obtain service data in a specified time period, and divide the specified time period into sub time periods | S200 |

↓

| | |
|---|---|
| For each sub time period, determine respective features of the service data in the sub time period based on the service data | S202 |

↓

| | |
|---|---|
| Sort respective features of the service data in the sub time periods based on a specified sorting rule of the sub time periods to obtain a feature sequence | S204 |

↓

| | |
|---|---|
| Identify whether the service data is legal by inputting the feature sequence into a risk control model. | S206 |

FIG. 2

301

Acquisition module

302

Determining module

303

Sorting module

304

Training module

FIG. 3

401

Acquisition module

402

Determining module

403

Sorting module

404

Identification module

FIG. 4

Risk control model training device

Processor

Memory

FIG. 5

Risk control device

Processor

Memory

FIG. 6

## INTERNATIONAL SEARCH REPORT

| International application No. |
| --- |
| **PCT/CN2018/116088** |

| A. | CLASSIFICATION OF SUBJECT MATTER |
| --- | --- |
| | G06Q 40/00(2012.01)i |

According to International Patent Classification (IPC) or to both national classification and IPC

| B. | FIELDS SEARCHED |
| --- | --- |

Minimum documentation searched (classification system followed by classification symbols)

    G06Q

Documentation searched other than minimum documentation to the extent that such documents are included in the fields searched

Electronic data base consulted during the international search (name of data base and, where practicable, search terms used)

    CNPAT, WPI, EPODOC, CNKI: 序列, 特征, 向量, 排序, 时间, 周期, 训练, 样本, 模型, serial, feature??, vector??, list, order +, time, train+, sample??, model

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| PX | CN 108305158 A (ALIBABA GROUP HOLDING LIMITED) 20 July 2018 (2018-07-20) claims 1-14, and description, paragraphs [0046]-[0140] | 1-14 |
| X | CN 106033574 A (ALIBABA GROUP HOLDING LIMITED) 19 October 2016 (2016-10-19) description, paragraphs [0002]-[0065] | 1, 6, 7, 12-14 |
| A | CN 107358247 A (ALIBABA GROUP HOLDING LIMITED) 17 November 2017 (2017-11-17) entire document | 1-14 |
| A | CN 107301577 A (ALIBABA GROUP HOLDING LIMITED) 27 October 2017 (2017-10-27) entire document | 1-14 |
| A | CN 101393643 A (EAST CHINA NORMAL UNIVERSITY) 25 March 2009 (2009-03-25) entire document | 1-14 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **22 January 2019** | **19 February 2019** |

| Name and mailing address of the ISA/CN | Authorized officer |
| --- | --- |
| **National Intellectual Property Administration, PRC (ISA/CN)** <br> **No. 6, Xitucheng Road, Jimenqiao, Haidian District, Beijing 100088** <br> **China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2018/116088**

| Patent document cited in search report | | | Publication date (day/month/year) | Patent family member(s) | | | Publication date (day/month/year) |
|---|---|---|---|---|---|---|---|
| CN | 108305158 | A | 20 July 2018 | None | | | |
| CN | 106033574 | A | 19 October 2016 | None | | | |
| CN | 107358247 | A | 17 November 2017 | HK | 1246455 | A0 | 07 September 2018 |
| CN | 107301577 | A | 27 October 2017 | None | | | |
| CN | 101393643 | A | 25 March 2009 | None | | | |

Form PCT/ISA/210 (patent family annex) (January 2015)